Europäisches Patentamt

(19) European Patent Office

Office européen des brevets

(11) Veröffentlichungsnummer: **0 059 312 B1**

(12) **EUROPÄISCHE PATENTSCHRIFT**

(45) Veröffentlichungstag der Patentschrift:
21.11.84

(51) Int. Cl.³: **F 16 D 3/40**

(21) Anmeldenummer: **82100469.4**

(22) Anmeldetag: **23.01.82**

(54) **Kardangelenk.**

(30) Priorität: **27.02.81 DE 3107373**

(43) Veröffentlichungstag der Anmeldung:
**08.09.82 Patentblatt 82/36**

(45) Bekanntmachung des Hinweises auf die Patenterteilung:
**21.11.84 Patentblatt 84/47**

(84) Benannte Vertragsstaaten:
**AT FR GB IT SE**

(56) Entgegenhaltungen:
**DE - B - 1 072 108**
**DE - C - 922 025**
**FR - A - 455 021**
**GB - A - 965 635**
**US - A - 3 538 721**

(73) Patentinhaber: **SKF KUGELLAGERFABRIKEN GMBH,
Ernst-Sachs-Strasse 2-8 Postfach 1440,
D-8720 Schweinfurt (DE)**

(72) Erfinder: **Laszlofalvi, Zoltan,
Harald-Hamberg-Strasse 14, D-8720 Schweinfurt (DE)**
Erfinder: **Kunkel, Heinrich, Dr., Wilhelm-Leibl-Weg 16,
D-8720 Schweinfurt (DE)**
Erfinder: **Olschewski, Armin, Stösselstrasse 8,
D-8720 Schweinfurt (DE)**

(74) Vertreter: **Glanz, Werner, Dipl.-Ing.,
Ernst-Sachs-Strasse 2-8, D-8720 Schweinfurt (DE)**

## Beschreibung

Die Erfindung betrifft ein Kardangelenk, bestehend aus einem Gelenkkreuz und je einem auf dessen zylindrischen Zapfen schwenkbar gelagerten Antriebs- und Abtriebskopf mit je zwei im wesentlichen axial verlaufenden Gabelarmen mit diametral gegenüberliegend und symmetrisch angeordneten Lagerbohrungen.

Kardangelenke dieser allgemein bekannten Art werden für Drehantriebe verwendet, wenn die Antriebswelle und die Abtriebswelle im Winkel zueinander stehen oder ständigen Winkelbewegungen unterworfen sind. Sie werden vorzugsweise in der Maschinen- und Anlagentechnik und bei Fahrzeugen verwendet. Insbesondere an Fahrzeugen werden sie mehrfach bei der Kardanwelle eingesetzt, um die Relativbewegungen zwischen Antriebsachse und Motor bzw. Rahmen auszugleichen. Bei Fahrzeugen mit geteilter und mittengelagerter Kardanwelle sind beispielsweise drei Kardangelenke angebracht. Weiterhin werden sie auch bei Fahrzeugen mit geteilter Antriebsachse für die Halbwellen verwendet. Die Lager für die Kardangelenke können als Wälz- oder auch Gleitlager ausgeführt sein und sind insbesondere bei schweren Fahrzeugen mit starken Motoren sehr hohen Wechselbelastungen ausgesetzt. Die größten Beanspruchungen treten beispielsweise beim Wechsel der Getriebegänge als sogenannte Lastwechselschläge oder bei hartem und zu schnellem Einkuppeln auf. Aus diesem Grund müßten die Antriebs- und Abtriebsköpfe der Kardangelenke mit den entsprechenden Gabelarmen zur Aufnahme der Lager sehr robust und besonders stabil ausgeführt sein. Eine auch extremen Belastungsspitzen entsprechende Ausführung konnte sich jedoch bisher nicht durchsetzen, weil das Gewicht und das dabei auftretende zusätzliche Trägheitsmoment im Betrieb aus wirtschaftlichen Überlegungen nicht akzeptiert werden kann.

Die bekannten Ausführungen weisen deshalb relativ schwache, axial gerichtete Gabelarme auf, an deren freien Enden Bohrungen für die Lager angeordnet sind. Auch bei besonders steifen Materialien werden die Gabelarme bei hoher Belastung in Umfangsrichtung verschränkt, wobei innerhalb des Materials eine starke elastische Verformung auftritt, und die Lagerbohrung im hohen Maß aus ihrer zylindrischen Form verzerrt wird. Als Folge davon vergrößert sich die Lagerbelastung wesentlich. Die dabei auftretenden unzulässigen Flächenpressungen können zu starkem Verschleiß und vorzeitigem Ausfall der Lager führen. So hat sich beispielsweise gezeigt, daß eingebaute Wälzlager nur 20% ihrer nominellen Lebensdauer erreichten, weil die Steifigkeit der Gabelarme zu gering war.

Bei einer durch die DE-B-1 072 108 bekannten Ausführung eines Universalgelenkes sind die Gabelarme einschließlich der Lagerbohrungen unsymmetrisch zur Drehachse des Gelenkes angeordnet (Fig. 5). In diesem Fall soll dadurch eine größere axiale Beweglichkeit zwischen Antriebs- und Abtriebskopf erzielt werden.

Aufgabe der Erfindung ist es, ein Kardangelenk zu schaffen, das bei gegenüber den bisher eingesetzten Gelenken unwesentlich verändertem Gewicht und Abmessungen wesentlich höhere Belastungen aufnehmen kann und eine größere Lebensdauer aufweist.

Die Aufgabe wird dadurch gelöst, daß jeder der Gabelarme zu der durch die Mittelpunktachse der Lagerbohrung und die Drehachse des Antriebs- bzw. Abtriebskopfes gebildeten Bezugsebene unsymmetrisch angeordnet ist.

Die Lagerbohrungen sind in bekannter Weise diametral gegenüberliegend und symmetrisch zum Antriebs- bzw. Abtriebskopf angeordnet. Lediglich die sie mit dem Antriebs- bzw. Abtriebskopf verbindenden Abschnitte der Gabelarme verlaufen nach der Erfindung nicht symmetrisch und sind beispielsweise in Umfangsrichtung versetzt angebracht. Durch diese Ausführungsform können die bei hohen Belastungen in Drehrichtung des Kardangelenkes auftretenden Kräfte die Gabelarme zwar geringfügig verschränken, die dadurch in den Gabelarmen auftretenden Zug- und Druckspannungen können jedoch die Form der Lagerbohrungen nur unwesentlich beeinflussen. Durch diese verbesserten Einbaubedingungen ist das Lager vorteilhafterweise weniger gefährdet und erreicht dadurch seine nominelle Lebensdauer, wodurch sich eine um ein Vielfaches höher liegende Gebrauchsdauer des gesamten Kardangelenkes ergibt. Diese mit dem erfindungsgemäßen Kardangelenk erzielten Ergebnisse können natürlich auch dahingehend genutzt werden, daß eine kleinere Dimensionierung aller Bauteile vorgenommen werden kann, wenn bei entsprechender Belastung eine so hohe Lebensdauer nicht erforderlich ist. Die Folge ist dabei ein vorteilhaft geringeres Gewicht und eine preisgünstigere Fertigung.

Nach einem weiteren Merkmal der Erfindung weist jeder der Gabelarme in dem von Antriebs- bzw. Abtriebskopf bis zur Lagerbohrung verlaufenden Abschnitt auf einer Seite der Bezugsebene E-E eine Ausnehmung auf.

Dadurch werden die an dieser Seite der Gabelarme auftretenden Zug- oder Druckspannungen weitgehend von der Lagerbohrung ferngehalten. Erstreckt sich die Ausnehmung bis zur Mitte des Gabelarmes, d. h. bis zu einer durch den Mittelpunkt der Lagerbohrung und in Achsrichtung des Kardangelenkes verlaufenden Linie, kann davon ausgegangen werden, daß bei Belastung keine ungünstige Verformung der Lagerbohrung mehr auftreten kann. Der dadurch verminderte Querschnitt der Gabelarme kann bei vielen Anwendungsfällen akzeptiert werden. Die Ausnehmung kann als Bohrung oder von einer Seitenfläche der Gabelarme her offen ausgeführt sein.

Bei einer weiteren Ausgestaltung der Erfindung ist jeder der Gabelarme auf einer Seite der Bezugsebene E-E verstärkt ausgeführt.

Auch durch diese Maßnahme entsteht ein unsymmetrischer Verlauf der Gabelarme. Die einseitige Verstärkung bewirkt eine höhere Steifigkeit und somit bei Verschränkung der Gabelarme einen geringeren Einfluß auf die Form der Lagerbohrungen. Werden die im vorangegangenen Beispiel angeführten Ausnehmungen angebracht, so kann durch die Verstärkung der Gabelarme auf der anderen Seite für bestimmte Anwendungsfälle ein größerer oder gleicher Querschnitt gegenüber bekannten Ausführungen vorgesehen werden.

Nach einem weiteren Merkmal der Erfindung ist jeder der Gabelarme von seinem mit der Lagerbohrung versehenen freien Ende her zunächst tangential zur Umfangsrichtung des Antriebs- bzw. Abtriebskopfes und danach in deren axiale Richtung abgewinkelt verlaufend angeordnet.

Der Gabelarm weist gegenüber bekannten Ausführungen keinen größeren Querschnitt auf, die Lagerbohrung jedoch ist am freien Ende des tangential verlaufenden Abschnittes angeordnet. Bei hohen Belastungen in Drehrichtung des Kardangelenkes können sich die Gabelarme zwar geringfügig verschränken, die Lagerbohrung liegt jedoch außerhalb des Bereiches komplexer Druck- und Zugspannungen, so daß die belastete zylindrische Fläche der Lagerbohrung davon unberührt bleibt. Lediglich gleichmäßige Zug- oder Druckkräfte treten wie bei jeder belasteten Lagerung auf. Diese bewirken aber nicht eine unzulässige Verzerrung und Verformung der die Last aufnehmenden Bohrungsfläche, so daß die Lager nicht vorzeitig ausfallen können.

Nach einem weiteren Merkmal der Erfindung liegt eine Seitenfläche der Gabelarme in der durch die Mittelpunktachse der Lagerbohrung und die Drehachse des Antriebs- bzw. Abtriebskopfes verlaufenden Bezugsebene.

Bei dieser Ausführung ist der tangential zur Umfangsrichtung verlaufende Teil der Gabelarme gerade so lang ausgeführt, daß eine Verformung der Lagerbohrung durch die Verschränkung der Gabelarme untereinander bei Belastung sicher unterbleibt. Obwohl hierbei alle Vorteile der Erfindung genutzt werden, ist eine kompakte Konstruktion mit geringen Abmessungen gewährleistet.

Nach einem anderen Merkmal der Erfindung umgibt der tangential zur Umfangsrichtung verlaufende Abschnitt der Gabelarme am freien Ende die Lagerbohrung mit gleichbleibender Wandstärke halbkreisförmig.

Dadurch wird sichergestellt, daß bei hoher Belastung in Richtung zum freien Ende der Gabelarme in dem betreffenden Teil der Bohrung gleiche Spannungsverhältnisse herrschen, wodurch eine gleichmäßige Lastverteilung auf eine große Fläche begünstigt wird.

Bei einer anderen Ausführung der Erfindung beträgt die Wandstärke der Gabelarme im Bereich des Überganges vom tangential zum axial verlaufenden Abschnitt mehr als ein Vierfaches der Wandstärke am freien Ende.

Die Lagerbohrung kommt auf diese Weise sehr weit aus dem Bereich der axial verlaufenden Abschnitte der Gabelarme zu liegen, wodurch diese an Stabilität gewinnen und ein Verschränken bei Belastung vorteilhafterweise nahezu unterbleibt.

Bei einer weiteren Ausführung der Erfindung ist das freie Ende des tangential zur Umfangsrichtung verlaufenden Abschnittes aller Gabelarme in gleiche Umfangsrichtung des Kardangelenkes weisend angeordnet.

Obwohl die Gabelarme im Bereich der Abwinklung einen großen Querschnitt aufweisen können, wird damit vorteilhafterweise eine sehr komtakte, raumsparende Ausführung erreicht, da in Umfangsrichtung dem der Lagerbohrung benachbarten, verstärkten Abschnitt eines Gabelarmes das freie Ende des nächsten Gabelarmes folgt. Bei Belastung werden die verstärkten, abgewinkelten Bereiche der Gabelarme, z. B. des Antriebskopfes, in Umfangsrichtung auf Druck und die des Abtriebskopfes auf Zug beansprucht; es kommen jedoch in beiden Fällen die Vorteile der Erfindung nahezu gleichermaßen zur Geltung, da durch das Verschränken der Gabelarme keine Verformung der Lagerbohrungen auftreten kann.

Bei einer weiteren Ausführung der Erfindung sind die freien Enden des tangential zur Umfangsrichtung verlaufenden Abschnittes der Gabelarme des Antriebskopfes in die eine Drehrichtung des Kardangelenkes und die des Abtriebskopfes in die entgegengesetzte Drehrichtung weisend angeordnet.

Diese Anordnung ist dann vorteilhaft, wenn besonders hohe Belastungen in nur einer Drehrichtung auftreten, und die äußeren Abmessungen des Kardangelenkes eine untergeordnete Rolle spielen.

Die Erfindung wird im folgenden anhand der in der Zeichnung dargestellten Beispiele beschrieben. Es zeigt

Fig. 1 die räumliche Darstellung eines Kardangelenkes mit in gleiche Umfangsrichtung des Kardangelenkes weisenden Gabelarmen,

Fig. 2 einen Gabelarm mit einer offenen Ausnehmung an einer Seite und einer Verstärkung auf der anderen Seite,

Fig. 3 ein Diagramm der Lastverteilung in der Lagerbohrung bei einer Drehrichtung des Kardangelenkes,

Fig. 4 ein Diagramm der Lastverteilung in der Lagerbohrung bei gegenüber Fig. 3 umgekehrter Drehrichtung und

Fig. 5 ein Diagramm der Lastverteilung in der Lagerbohrung eines herkömmlichen Kardangelenkes mit axial gerichteten Gabelarmen.

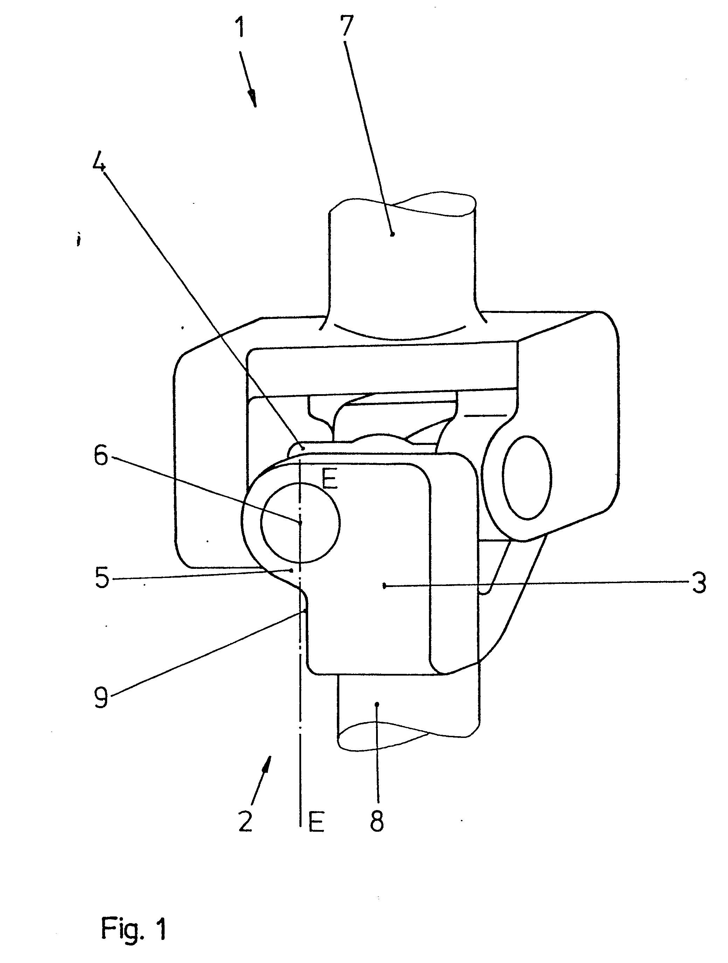

Das in Fig. 1 dargestellte Kardangelenk besteht aus einem Antriebskopf 1 und einem Abtriebskopf 2, denen nur der besseren Verständlichkeit wegen diese Funktion zugeordnet wurde und die die umgekehrte Funktion in gleicher Weise erfüllen können. Beide weisen Gabelarme auf, die auf einem Gelenkkreuz 4 schwenkbar gelagert sind. Die Gabelarme 3 sind an ihrem freien Ende mit Lagerbohrungen 6 versehen, von denen aus sie zunächst tangential zur Umfangsrichtung verlaufen, dann in axiale Richtung abgewinkelt und mit der Antriebs- 7 bzw. Abtriebswelle 8 verbunden sind. Im Bereich des Übergangs vom tangential zum axial verlaufenden Abschnitt sind die Gabelarme 3 mit großem Querschnitt ausgeführt. Das freie Ende 5 umschließt die Lagerbohrungen 6 halbkreisförmig mit gleicher Wandstärke und steht nur so weit über den axial gerichteten Teil hinaus, daß dessen Seitenfläche 9 durch die Mittelpunktachse der Lagerbohrungen 6 verläuft. Bei extremen Belastungen bewirken die in Umfangsrichtung des Kardangelenkes gerichteten Kräfte in den Lagerbohrungen 6 ein geringfügiges Verschränken der Gabelarme 3 innerhalb des elastischen Bereiches des Materials, wobei z. B. der in Fig. 1 vorne dargestellte Gabelarm 3 nach links und der diesem gegenüberliegende, in Fig. 1 nur teilweise sichtbare, hinten liegende nach rechts gekippt wird. Durch die Kippbewegung treten in den axial verlaufenden Teilen der Gabelarme 3 Zug- und Druckspannungen auf und bewirken eine Verformung des Materials, wovon jedoch die Lagerbohrungen 6 nahezu unbetroffen sind, da sie außerhalb des axial verlaufenden Abschnittes liegen.

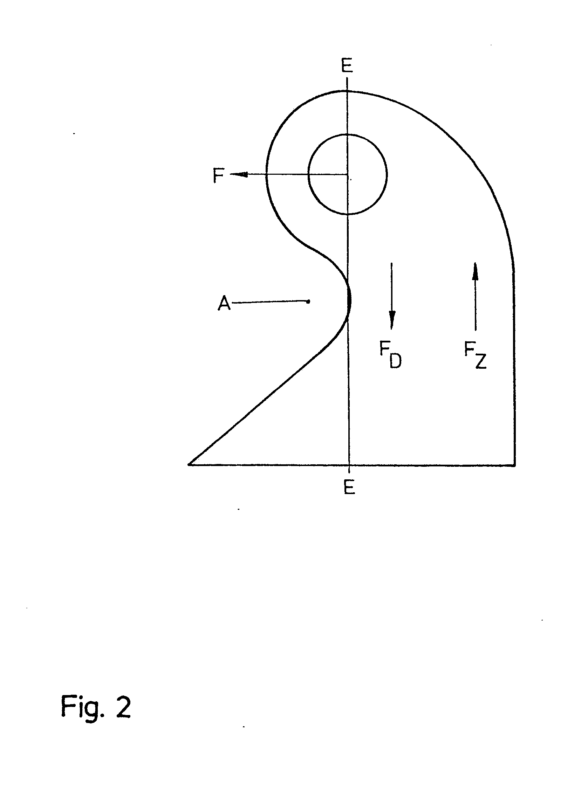

Der in Fig. 2 dargestellte Gabelarm verläuft zu der durch die Mittelpunktachse der Lagerbohrung und die Drehachse des Kardangelenkes gebildeten Bezugsebene E-E unsymmetrisch. Er weist an einer Seite eine offen Ausnehmung A auf und ist an der anderen Seite verstärkt ausgeführt. Bei Belastung in Drehrichtung des Kardangelenkes wirkt an der Lagerbohrung eine Kraft F und verzieht den Gabelarm in ihre Richtung, so daß im Material Druckspannungen $F_D$ und Zugspannungen $F_Z$ auftreten. Ihre Wirkungslinien liegen jedoch weitgehend außerhalb der durch die Kraft F belasteten Zonen der Lagerbohrung, so daß eine Verformung nicht auftreten kann.

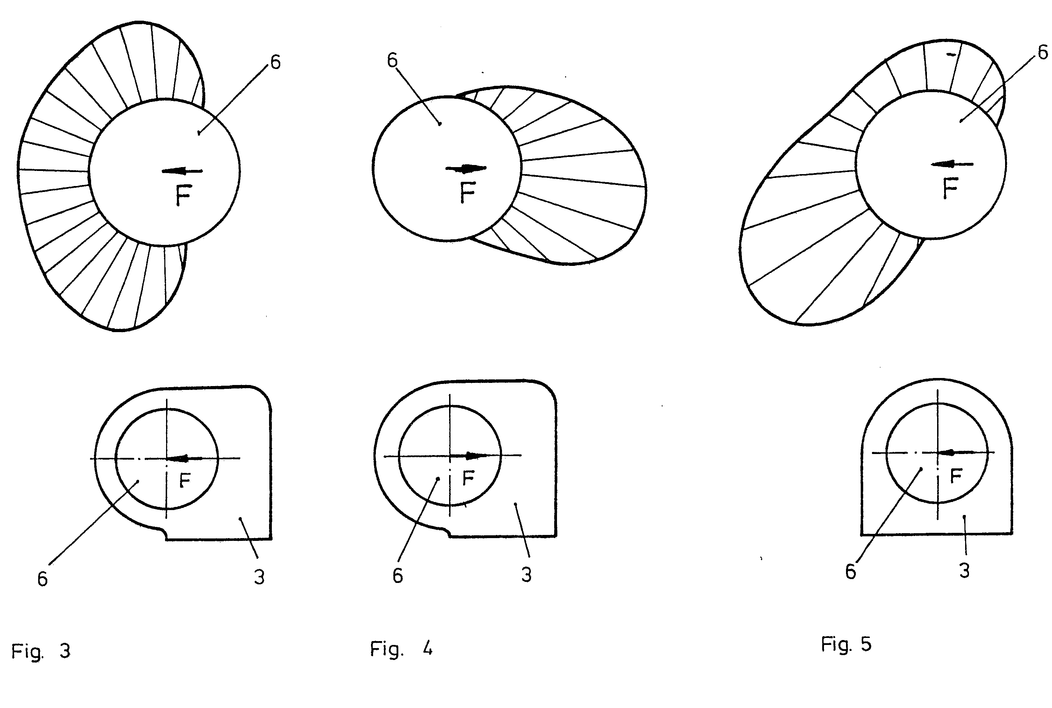

In Fig. 3 ist die Lastverteilung in der Lagerbohrung 6 eines Gabelarmes 3 dargestellt, wenn eine Kraft F in der angegebenen Richtung über den Zapfen des Gelenkkreuzes in Umfangsrichtung des Kardangelenkes auf die zylindrische Bohrungsfläche der Lagerbohrung 6 einwirkt. Wie das Diagramm zeigt, ist eine über 180° der Bohrungsfläche nahezu gleichmäßige Lastverteilung gegeben, weil die Lagerbohrung 6 ihre Form beibehält, obwohl durch die extreme Belastung ein leichtes Verschränken der Gabelarme 3 auftritt.

Wie in Fig. 4 zu sehen ist, bewirkt eine Kraft, die gegenüber Fig. 3 in umgekehrter Richtung auf den Gabelarm 3 einwirkt, eine Lastverteilung auf eine nicht so große Fläche der Lagerbohrung 6. Von Bedeutung ist jedoch hierbei die nahezu gleiche Verteilung zu beiden Seiten der Wirkungslinie der Kraft F.

In Fig. 5 ist dargestellt, wie sich die in Umfangsrichtung wirkende Kraft F auf die Fläche der Lagerbohrung 6 eines in herkömmlicher Bauart ausgeführten Gabelarmes 3 verteilt. Durch das Verschränken der Gabelarme 3 verformt sich die Lagerbohrung 6 in hohem Maße, so daß Materialspannungen entstehen, die wie im Diagramm der Fig. 5 zu sehen ist, das Lager auch außerhalb der eigentlichen Richtung der Kraft, d. h. in einem Bereich von mehr als 180° ungleichmäßig belasten. Dadurch wird das Lager unzulässig verspannt und fällt aus.

## Patentansprüche

1. Kardangelenk, bestehend aus einem Gelenkkreuz (4) und je einem auf dessen zylindrischen Zapfen schwenkbar gelagerten Antriebs- und Abtriebskopf (1, 2) mit je zwei im wesentlichen axial verlaufenden Gabelarmen (3) mit diametral gegenüberliegend und symmetrisch angeordneten Lagerbohrungen (6), dadurch gekennzeichnet, daß jeder der Gabelarme (3) zu der durch die Mittelpunktachse der Lagerbohrung (6) und die Drehachse des Antriebs- (1) bzw. Abtriebskopfes (2) gebildeten Bezugsebene (E-B) unsymmetrisch angeordnet ist.

2. Kardangelenk nach Anspruch 1, dadurch gekennzeichnet, daß jeder der Gabelarme (3) in dem vom Antriebs- (1) bzw. Abtriebskopf (2) bis zur Lagerbohrung (6) verlaufenden Abschnitt auf einer Seite der Bezugsebene (E-E) eine Ausnehmung (A) aufweist.

3. Kardangelenk nach Anspruch 1 oder 2, dadurch gekennzeichnet, daß jeder der Gabelarme (3) auf einer Seite der Bezugsebene (E-E) verstärkt ausgeführt ist.

4. Kardangelenk nach Anspruch 1, dadurch gekennzeichnet, daß jeder der Gabelarme (3) von seinem mit der Lagerbohrung (6) versehenen freien Ende (5) her zunächst tangential zur Umfangsrichtung des Antriebs- (1) bzw. Abtriebskopfes (2) und danach in deren axiale Richtung abgewinkelt verlaufend angeordnet ist.

5. Kardangelenk nach Anspruch 2 oder 4, dadurch gekennzeichnet, daß eine Seitenfläche (9) der Gabelarme (3) in der durch die Mittelpunktachse der Lagerbohrung (6) und die Drehachse des Antriebs- (1) bzw. Abtriebskopfes (2) verlaufenden Bezugsebene (E-E) liegt.

6. Kardangelenk nach einem der Ansprüche 1, 4 oder 5, dadurch gekennzeichnet, daß der tangential zur Umfangsrichtung verlaufende Abschnitt der Gabelarme (3) am freien Ende (5) die Lagerbohrung (6) mit gleichbleibender Wandstärke halbkreisförmig umgibt.

7. Kardangelenk nach einem der Ansprüche 1 oder 4 bis 6, dadurch gekennzeichnet, daß die Wandstärke der Gabelarme (3) im Bereich des Übergangs vom tangential zum axial verlaufenden Abschnitt mehr als ein Vierfaches der Wandstärke am freien Ende (5) beträgt.

8. Kardangelenk nach einem der Ansprüche 1 oder 4 bis 7, dadurch gekennzeichnet, daß das freie Ende (5) des tangential zur Umfangsrichtung verlaufenden Abschnittes aller Gabelarme (3) in gleiche Umfangsrichtung des Kardangelenkes weisend angeordnet sind.

9. Kardangelenk nach einem der Ansprüche 1 oder 4 bis 7, dadurch gekennzeichnet, daß die freien Enden (5) des tangential zur Umfangsrichtung verlaufenden Abschnittes der Gabelarme (3) des Antriebskopfes (1) in die eine Drehrichtung des Kardangelenkes und die des Abtriebskopfes (2) in die entgegengesetzte Drehrichtung weisend angeordnet sind.

## Claims

1. Cardan joint, comprising a cross (4) and one drive yoke and driven yoke (1, 2) each pivoted on the cylindrical journal of said cross, each yoke having two arms (3) disposed substantially axially and having diametrically opposite bearing bores (6) symmetrically arranged on said yoke arms, characterized in that each of the yoke arms (3) is unsymmetrical with respect to the plane of reference (E-E) formed by the centre axis of the bearing bore (6) and the axis of rotation of the drive yoke (1) or the driven yoke (2).

2. Cardan joint as claimed in claim 1, characterized in that each of the yoke arms (3) has a cut-out (A) in its portion extending from the drive yoke (1) or driven yoke (2) to the bearing bore (6), on one side of the plane of reference (E-E).

3. Cardan joint as claimed in claim 1 or 2, characterized in that each of the yoke arms (3) is circumferentially thicker on one side of the plane of reference (E-E).

4. Cardan joint as claimed in claim 1, characterized in that each of the yoke arms (3) extends tangentially from the free end (5) thereof having the bearing bore (6), in the circumferential directions of the drive yoke (1) or driven yoke (2) and then turns to extend in the axial direction.

5. Cardan joint as claimed in claim 2 or 4, characterized in that one side face (9) of the yoke arms (9) lies in the plane of reference (E-E) formed by the centre axis of the bearing bore (6) and the axis of rotation of the drive yoke (1) or the driven yoke (2).

6. Cardan joint as claimed in one of the claims 1, 4 or 5, characterized in that the section of the yoke arms (3) that is tangential to the circumferential direction semicircularly encompasses the bearing bore (6) with its free end (5), with a uniform wall thickness.

7. Cardan joint as claimed in one of the claims 1 or 4 to 6, characterized in that the wall thickness of the yoke arms (3) in the area of the transition from the tangential to the axial portion is more than four times the wall thickness at the free end (5).

8. Cardan joint as claimed in one of the claims 1 or 4 to 7, characterized in that the free end (5) of the portion of all yoke arms (3) which extends tangentially to the circumferential direction points in the same circumferential direction around the cardan joint.

9. Cardan joint as claimed in one of the claims 1 or 4 to 7, characterized in that the free ends (5) of the portion of the yoke arms (3) of the drive yoke (1) point in one direction of rotation of the cardan joint and those of the driven yoke (2) point in the opposite direction of rotation.

## Revendications

1. Joint de cardan comprenant un croisillon cruciforme (4) et une chape de commande et chape de sortie (1, 2) chacune, montées de manière orientable sur le tourillon cylindrique du croisillon, la chape de commande et la chape de sortie ayant deux bras en saillie (3) chacune pourvus d'alésages de paliers (6) diamétralement opposés et symétriques l'un par rapport à l'autre, caractérisé par le fait que chacun des bras en saillie (3) est disposé asymétriquement par rapport au plan de référence (E-E) formé par l'axe de centre de l'alésage de palier (6) et l'axe de rotation de la chape de commande (1) et chape de sortie (2) respectivement.

2. Joint de cardan suivant la revendication 1, caractérisé par le fait que chacun des bras en saillie (3) comprend un évidement (A) d'un côté du plan de référence (E-E) dans la partie s'étendant de la chape de commande (1) ou chape de sortie (2) jusqu'à l'alésage de palier (6).

3. Joint de cardan suivant la revendication 1 ou 2, caractérisé par le fait que chacun des bras en saillie (3) est renforcé d'un côté du plan de référence (E-E).

4. Joint de cardan suivant la revendication 1, caractérisé par le fait que chacun des bras en saillie (3) s'étend avec son bout libre (5) pourvu de l'alésage de palier (6) d'abord tangentiellement à la direction circonférentielle de la chape de commande (1) ou chape de sortie (2) et forme alors un angle pour s'étendre en direction axiale.

5. Joint de cardan suivant la revendication 2 ou 4, caractérisé par le fait qu'une face latérale (9) des bras en saillie (3) est disposée dans le plan de référence (E-E) formé par l'axe de centre de l'alésage de palier (6) et l'axe de rotation de la chape de commande (1) ou chape de sortie (2).

6. Joint de cardan suivant l'une quelconque des revendications 1, 4 ou 5, caractérisé par le fait que la partie des bras en saillie tangentielle à la direction circonférentielle entoure, au bout libre (5), l'alésage de palier (6) en demi-cercle et avec une épaisseur de paroi uniforme.

7. Joint de cardan suivant l'une quelconque des revendications 1 ou 4 à 6, caractérisé par le fait que l'épaisseur de paroi des bras en saillie (3), dans la zone de transition entre la partie tangentielle et la partie axiale, a plus que quatre fois l'épaisseur de paroi au bout libre (5).

8. Joint de cardan suivant l'une quelconque des revendications 1 ou 4 à 7, caractérisé par le fait que le bout libre (5) de la partie, tangentielle à la direction circonférentielle, de tous les bras en saillie (3) montre dans la même direction circonférentielle du joint de cardan.

9. Joint de cardan suivant l'une quelconque des revendications 1 ou 4 à 7, caractérisé par le fait que les bouts libres (5) de la partie, tangentielle à la direction circonférentielle, des bras en saillie (3) de la chape de commande (1) montrent dans le sens de rotation de joint de cardan tandis que ceux de la chape de sortie (2) montrent dans le sens de rotation opposé.

Fig. 1

Fig. 2

Fig. 3

Fig. 4

Fig. 5

0 059 312